# EUROPEAN PATENT SPECIFICATION

(11) **EP 4 312 324 B1**
(45) Date of publication and mention of the grant of the patent: **24.06.2026**
(21) Application number: 23187409.0
(22) Date of filing: 25.07.2023
(51) Int. Cl.: H01R 13/66, B60L 53/16, B60L 53/302, H05B 3/06

(54) **HEATABLE CHARGING SOCKET**
BEHEIZBARE LADEDOSE
PRISE DE CHARGE CHAUFFANTE

(30) Priority: 27.07.2022 DE 102022118827
(43) Date of publication of application: 31.01.2024
(73) Proprietor: TE Connectivity Germany GmbH, 64625 Bensheim (DE)
(72) Inventor: ISKRA, Mike, 64625 Bensheim (DE); SCHWAN, Ralf, 64625 Bensheim (DE); HEISS, Dominik, 64625 Bensheim (DE)
(74) Representative: Grünecker Patent- und Rechtsanwälte PartG mbB

(56) References cited:
- CN-A- 110 247 246
- CN-U- 212 950 215
- US-A1- 2021 078 419

## Description

The invention relates to a charging socket of an electric or hybrid vehicle for connection to a charging plug, wherein the charging socket has at least one heating module shaft which is adapted to receive a heating module, and a kit for providing the same.

When charging electric or hybrid vehicles at temperatures below the freezing point, there is a risk of the charging plug becoming iced up and frozen to the charging socket when plugged in after a charging process has been completed. This is due to the fact that during the charging process, heat is generated at the connection between the charging plug and charging socket by the flowing charging current, which melts snow or ice on the vehicle, for example. After the charging process is complete, the charging plug and charging socket cool down and melted water can ice up the charging socket and charging plug so that the charging plug can no longer be pulled out of the charging socket. Charging sockets are known from e.g. CN 212 950 215 U, CN 110 247 246 A and US 2021/078419 A1.

US 2021/078419 A1 discloses the preamble of claim 1.

Depending on the region in which the electric or hybrid vehicle is used, such icing can occur with varying frequency, especially in the winter months.

Thus, it is the object of the present invention to improve existing charging sockets to prevent icing between the charging plug and charging socket or to eliminate existing icing.

The invention solves this problem for the charging socket mentioned at the beginning by the charging socket defined in claim1, namely in that the charging socket has a socket wall which encloses a contact body receiving contact elements, forming an annular gap, wherein the at least one heating module shaft extends into the socket wall.

Further disclosed is using a heating module in a charging socket of an electric or hybrid vehicle, wherein the charging socket has at least one heating module shaft which is adapted to receive the heating module.

The invention further solves this problem for a kit for providing a heatable charging socket of an electric or hybrid vehicle in that it comprises a charging socket of the present inventions, which has a plurality of N heating module shafts and which is arbitrarily equipped with 1 to N heating modules.

Furthermore, the invention solves this problem for an electric or hybrid vehicle in that the latter is equipped with a charging socket according to the present invention.

This has the advantage that the charging socket can be heated on the vehicle and thus icing between the charging plug and charging socket can be prevented. It is also possible to use the invention to thaw an iced-up charging socket again and remove the icing. Due to the fact that the heating module is adapted separately, a heating module can be received in the at least one heating module shaft or not, preferably depending on the region in which the electric or hybrid vehicle is to be used. Thus, in warmer regions such as Portugal, for example, the use of a heating module in the heating module shaft of the charging socket can be dispensed with, whereas the charging socket for an electric or hybrid vehicle sold in Norway can be equipped with the at least one heating module.

A charging socket adapted in such a way also has the advantage that heating of the charging socket is possible independently of the external charging structure used, since the at least one heating module is controlled and operated on the vehicle side. This also prevents icing between the charging plug and charging socket at a public charging station or removes icing when the charging process is complete and the charging plug and charging socket would already have cooled down without the heating module according to the invention. On the vehicle side, this means that the at least one heating module is operated via an on-board energy storage device, preferably the traction battery.

The invention can be improved by the following further developments, each of which is preferred in itself and can be combined with one another as desired.

Thus it is particularly preferred if the at least one heating module shaft is cast into the material of the charging socket. The heating module shaft thus forms a shaft-like cavity in a wall of the charging socket.

The charging socket may have a front side for plugging in the charging plug and a rear side facing away from the front side, wherein the at least one heating module shaft extends from the rear side to the front side of the charging socket. Preferably, the at least one heating module shaft may open toward the rear side.

Thus, it is possible to insert a heating module into a heating module shaft from the rear side of the charging socket. Preferably, exactly one heating module is inserted into a heating module shaft, or a heating module shaft is adapted to receive exactly one heating module.

This structure has the advantage that heat can be introduced into the charging socket via the heating module in all directions perpendicular to the extension of the heating module and, for example, not only on one rear side. This is preferred because icing between the charging plug and charging socket occurs at the front of the charging socket.

The charging socket can have contact receptacles that are adapted to receive electrical contacts for contacting mating contacts of a charging plug. In order to enable a homogeneous heat input, in a preferred configuration the at least one heating module shaft can extend between at least two contact receptacles. This heating module shaft can also extend from the rear side to the front side and can preferably be open towards the rear side and closed towards the front side. This has the advantage that heat can also be introduced into the charging socket between the contact receptacles and not only at its wall.

The charging socket has a socket wall which encloses a contact body receiving contact elements, forming an annular gap, wherein the at least one heating module shaft extends into the socket wall.

The contact body is to be understood as that part of the charging socket which receives the electrical contacts of the charging socket and forms a plug face. The contact body thereby extends away from the rear side. Spaced apart from the contact body, a self-contained socket wall completely surrounding the contact body can be provided. The annular gap is configured between this socket wall and the contact body. A mating plug can thus preferably be aligned and/or centered and further received in the annular gap. For this purpose, the annular gap and/or the contact body can configure flattened areas which prevent incorrect mating between the charging plug and charging socket.

Preferably, at least one heating module shaft is provided both in the contact body, here further preferably between at least two contact receptacles, and in the socket wall, so that both the contact body and the socket wall can be heated.

In a further configuration, the charging socket can have the at least one heating module shaft in an upper third of the charging socket in an assembled state, i.e. when this is installed in an electric or hybrid vehicle. This is preferred because icing occurs increasingly on the upper side of the connection between the charging plug and the charging socket.

In order to receive the heating module, in a further configuration of the charging socket the socket wall may have at least one thickening in which a heating module shaft is arranged. In other configurations, several thickenings, each having a heating module shaft, may be provided in the socket wall. Preferably, these thickenings are symmetrical, further preferably mirror symmetrical, with respect to an axis extending from top to bottom (with respect to an assembly state of the charging socket). Likewise, the thickenings can be provided rotationally symmetrical and equidistant along the socket wall. Depending on the region in which the electric or hybrid vehicle is to be used, almost any number of thickenings can be provided, each with a heating module shaft. For example, it may be sufficient for some regions if one heating element each is received in a heating module shaft in the upper third of the socket wall and/or in the upper third of the contact body, whereas in a charging socket for an electric or hybrid vehicle for the (for example) Finnish market, it may be preferred if two heating elements are received in one heating module shaft each in the contact body and four or more heating elements are received in four or more heating module shafts each in the socket wall.

The charging socket can therefore be used in a highly variable and versatile manner without having to manufacture different charging sockets, in other words charging sockets with different geometries, for different markets. Depending on the region of application, the heating module shafts can be left free in any combination or equipped with a heating module.

Since 2011/2012, it has been possible to use combined charging sockets in electric or hybrid vehicles. In these, the charging socket can be adapted with an AC charging socket and a DC charging socket. In a preferred configuration, the at least one heating module shaft can be arranged on the AC charging socket.

The DC charging socket is usually used for fast charging of electric or hybrid vehicles, so that the vehicle is used again immediately after the charging process is completed, or the fast charging process is terminated when the vehicle is to be used again, thus it is interrupted at an early stage. In these application cases, icing between the charging plug and charging socket is much less likely than in the case of slower charging via the AC charging socket, which is used to charge electric or hybrid vehicles overnight via so-called wallboxes in private households, for example. Here, the risk of icing is significantly greater, as the charging plug remains in the charging socket after the end of the charging process.

In particular, the charging socket according to the invention can be adapted as a CCS charging socket (combined charging system) and comply with the IEC 62196 standard, for example.

Depending on how far a heating module shaft extends from the rear side to the front side, heat can be transferred with varying homogeneity along the direction from the rear side to the front side from the heating element into the charging socket. In one configuration, it is thus preferred if the at least one heating module shaft extends over at least half of the depth between the rear side and the front side of the charging socket. This can ensure more homogeneous heating of the charging socket.

The depth of the heating module shaft can correspond to an active length of the heating module. The active length is the length over which the heating module can generate and emit heat.

Since icing can occur in particular at the front of the charging socket, in a particularly preferred configuration a received heating module can have an active area of a first length and a passive area of a second length. In the active area, the heating element generates heat during operation, i.e. when a voltage (preferably controlled and/or regulated by a control unit of the electric vehicle) is applied to it, whereas the heating element in the passive area does not generate any heat during operation. This can be achieved, for example, by the heating element having a higher electrical resistance in the active area than in the passive area, and thus current conduction takes place in the passive area without significant heat loss (this heat loss is used in the active area to heat the charging socket). This can be used in particular to heat an area of the charging socket facing the front side, since icing is more likely to occur at this front side than at the rear side, i.e. in an area of the charging socket facing the vehicle or offset into it.

This can have the further advantage that heat only has to be generated at those points of the charging socket that may be affected by icing. This avoids unnecessary energy input in the form of heat in areas of the charging socket that are not affected by icing anyway. This saves electrical energy taken from the energy storage (e.g. from the traction battery) of the electric or hybrid vehicle.

In a preferred configuration of the charging socket according to the invention, a plurality of heating module shafts is provided in the contact body and/or in the socket wall, wherein the heating module shafts open towards the rear side. The heating module shafts are preferably symmetrical, and further preferably mirror-symmetrical, with respect to an axis extending from top to bottom (with respect to the assembly state of the charging socket). Likewise, the heating module shafts can be rotationally symmetrical and equidistantly, i.e. equally distributed, arranged along a circumferential direction. Depending on the region in which the electric or hybrid vehicle is to be used, almost any number of heating module shafts can be equipped or fitted with one heating module each.

In a further preferred configuration, the at least one heating module shaft may have a bottom closing the at least one heating module shaft to the front side.

The heating module shaft can thus be closed at the front side. At the front side, thus at the bottom of the heating module shaft, the cavity extending in the wall of the charging socket (of the contact carrier) can thus end and two opposite walls of the heating module shaft of the contact carrier can unite to form one wall of the charging socket (of the contact carrier).

A closed heating module shaft can be protected against the entry of foreign bodies and/or water because it is not accessible from outside the electric or hybrid vehicle when the charging socket is installed. If no heating module is inserted in a heating module shaft, this can, for example, be inserted subsequently by appropriately trained service personnel in the corresponding heating module shaft, which was previously inaccessible and thus kept free of contamination.

In order to enable good heat transfer between the heating module and the charging socket, i.e. between the heating module and an inner wall of the heating module shaft, in a further preferred configuration of the charging socket the heating module can be received in the respective heating module shaft without play or in a press fit. Preferably, the heating module is press-fitted into the respective heating module shaft. This enables good heat transfer from the heating module to the socket wall or contact body.

Particularly preferably, the heating module is adapted to complement the heating module shaft. This has the advantage that heat transfer is not impaired by air gaps. Ideally, the material of the heating module nestles against the material of an inner wall of the heating module shaft, so that heat transfer can take place by heat conduction. However, as soon as an air gap occurs, heat transfer is no longer performed exclusively by heat conduction, but also by heat radiation. However, this process conducts the heat generated by the heating module to the charging socket less effectively than heat conduction (an air gap has an insulating rather than a transferring effect; cf. insulating double-glazed windows).

In a preferred configuration, the above-mentioned kit according to the invention comprises identical or different heating modules. For example, a heating module with greater heating power can be received in the corresponding heating module shaft on an upper side of the charging socket than on a lower side of the charging socket. This takes into account a higher probability of icing on an upper side of the charging socket and can counteract this.

The heating module may include a heating resistor received in a housing. The heating resistor may be received in a two-part housing or in a housing produced by overmolding. In particular, the heating resistor may have electrical connections, wherein the electrical connections preferably face the rear side of the charging socket when the heating module is received in the respective heating module shaft. The at least one heating module can thus only be accessible and electrically contactable from the rear side. On the rear side, the charging socket can have a printed circuit board via which the heating element or elements can be controlled and contacted. For example, bent sections of the heating resistor or contacting means such as contact springs or contact pills attached to the heating resistor are suitable for this.

In the following, the invention is explained by way of example on the basis of embodiments with reference to the enclosed drawings. For the sake of simplicity, the same reference signs are always used for elements that correspond to each other in terms of function and/or structure.

In accordance with the above embodiments, a feature may be omitted in any of the following embodiments if its technical effect is not important in a particular application. Further, according to the above embodiments, features the technical effect of which is important in a particular application may be added.

It is shown by:
- Fig. 1: a schematic representation of the charging socket according to the invention in a perspective front view;
- Fig. 2: a schematic exploded view of the charging socket according to the invention in a perspective rear view;
- Fig. 3: a sectional view along the plane A-A shown in Fig. 1;
- Fig. 4: a perspective sectional view along the plane B-B shown in Fig. 1;
- Fig. 5: an enlarged sectional view along the plane C-C shown in Fig. 1; and
- Fig. 6: an exploded view of a configuration of the heating module according to the invention.

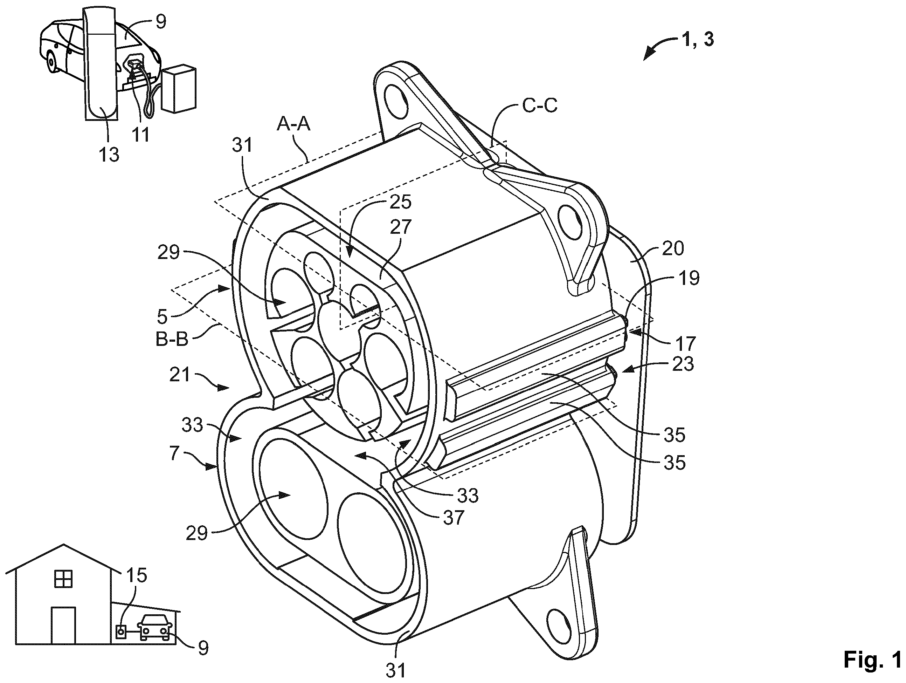

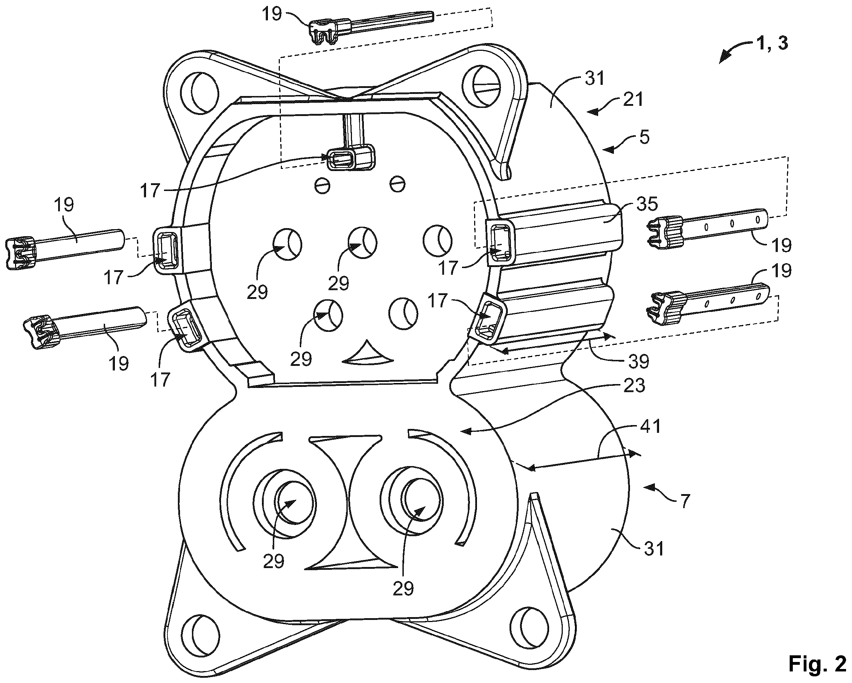

In Fig. 1 and Fig. 2, a charging socket 1 is shown in a perspective view from different directions. The charging socket 1 is adapted as a combined charging socket 3, i.e. it has an AC charging socket 5 and a DC charging socket 7.

The charging socket 1 is used in an electric or hybrid vehicle 9 to connect to a charging plug 11. This is possible, for example, at a publicly accessible charging station 13 or at a private domestic wallbox 15.

The configuration of the charging socket 1 shown has five heating module shafts 17, which can be seen more clearly in Fig. 2. Each heating module shaft 17 is adapted to receive a heating module 19. In Fig. 1, the heating modules 19 are received in a respective heating module shaft 17, whereas in Fig. 2 the heating modules 19 are shown removed from the respective heating module shaft 17. Furthermore, a printed circuit board 20 is shown in Fig. 1, via which the heating modules 19 can be supplied with electrical power. This circuit board 20 is not shown in Fig. 2.

The following explanations refer to both Fig. 1 and Fig. 2.

The charging socket 1 has a front side 21 for inserting the charging plug 11 and a rear side 23 facing away from the front side 21.

In the configuration of the charging socket 1 shown, the heating module shafts 17 extend from the rear side 23 to the front side 21 of the charging socket 1.

As can be seen in Fig. 2, the heating module shafts 17 open toward the rear side 23.

The charging socket 1 shown meets the requirements in terms of geometry and connection assignment that are placed on an electric or hybrid vehicle 9. For example, a flattened shape 25 of a contact body 27 (to prevent incorrect plugging in of a charging plug 11), its orientation and positioning with respect to the DC charging socket 7 are specified.

The contact body 27 has contact receptacles 29 in which, in the assembled state of the charging socket 1 (this state is not shown), electrical contacts (not shown) are received for contacting mating contacts (also not shown) of the charging plug 11. The AC charging socket 5 has seven such contact receptacles 29, and the DC charging socket 7 has two. For the sake of clarity, not all contact receptacles 29 are provided with a reference sign.

The charging socket 1 has a socket wall 31 which surrounds both the contact body 27 of the AC charging socket 5 and the contact body 27 of the DC charging socket 7, while forming an annular gap 33. The annular gaps 33 formed around the two contact bodies 27 merge between the AC charging socket 5 and the DC charging socket 7.

The configuration of the charging socket 1 shown has four thickenings 35 in the socket wall 31. In other configurations, any number of thickenings 35 may be provided. Likewise, the charging socket 1 can be adapted as an AC charging socket 5 only. In this case, the socket wall 31 completely surrounds the AC charging socket 5 and there is no DC charging socket 7. In this case, the socket wall 31 may extend around the contact body 27 in the lower area 37 of the AC charging socket 5 in a preferably circular arc.

With reference to Fig. 1 and Fig. 2, it is shown that in the configuration of the charging socket 1 shown in the Figures, one heating module shaft 17 is located in the contact body 27 of the AC charging socket 5, and four heating module shafts 17 extend from the rear side 23 toward the front side 21 in the thickenings 35 of the socket wall 31 of the AC charging socket 5. In other configurations (not shown) of the charging socket 1, any number of heating module shafts 17 may be provided in any arrangement on the AC charging socket 5, as well as on the DC charging socket 7. The number and positioning shown is purely exemplary.

Likewise, the corresponding heating modules 19 can be received in the heating module shafts 17 in any combination, or the heating modules 19 can also be omitted. In other words, as many heating modules 19 can be received in the charging socket 1 (preferably one heating module 19 in each of the corresponding heating module shafts 17) as the charging socket 1 has heating module shafts 17.

On the other hand, however, some heating module shafts 17 may be left free, i.e., no heating module 19 may be received in these heating module shafts 17. In particular, in warmer regions where the electric or hybrid vehicle 9 is to be used, no heating module 19 at all may be received in the charging socket 1. In this case, the heating module shafts 17 are empty.

However, the same charging socket 1 can be used for each application, which can then be equipped with the appropriate number of heating modules 19 to suit the region in which the electric or hybrid vehicle 9 is to be used. Thus, a heating power with which the charging socket 1 prevents icing can be set variably. The charging socket 1 is therefore variable and versatile and saves manufacturing costs.

In the configuration shown, a heating module shaft 17 is arranged in the contact body 27 between two contact receptacles 29. Furthermore, in the configuration shown, four heating module shafts 17 extend from the rear side 23 to the front side 21 in the thickenings 35, that is, in the socket wall 31. All heating module shafts 17 open to the rear side 23, so that a heating module 19 can be inserted into a heating module shaft 17 from the rear side 23 in each case, preferably without play or in a press fit 19a.

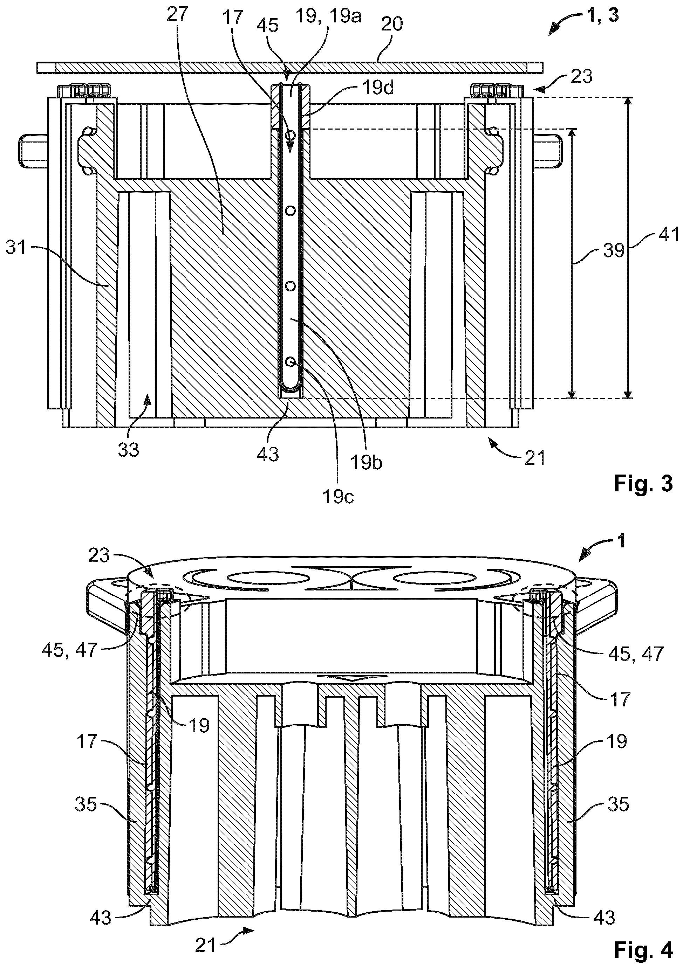

The heating module shafts 17 extend over a shaft depth 39 (see also Fig. 3 - Fig. 5) between the rear side 23 and the front side 21 of the charging socket 1. This shaft depth 39 is preferably greater than half of a depth 41 between the rear side 23 and the front side 21. In Fig. 2, the shaft depth 39 is indicated.

In the socket wall 31, the heating module shafts 17 are arranged symmetrically (mirror-symmetrically). In other configurations (not shown), the heating module shafts 17 may be arranged equidistantly on or in the socket wall 31.

The heating module shafts 17 are closed towards the front 21 by a bottom 43. A heating module 19 can be received up to this bottom 43. Preferably, the at least one heating module 19 is received in the respective heating module shaft 17 without play or in a press fit 19a. This can be seen, for example, in the sectional views of Fig.3, Fig. 4 and Fig. 5. The sectional views also show that the heating module shaft 19 is adapted to complement the heating module shaft 17. This improves heat transfer from the heating module 19 to the charging socket 1.

Figs. 3-5 show various sectional views along the planes A-A, B-B and C-C shown in Fig. 1.

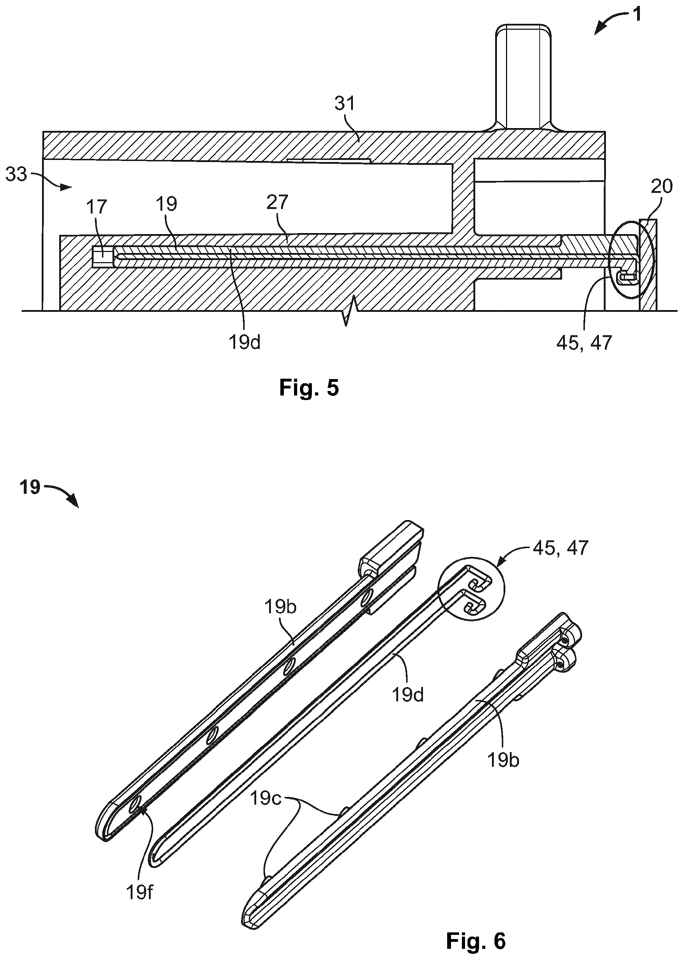

Fig. 3 and Fig. 5 show the heating module 19, which is received in the contact body 27. The heating module 19, which is shown in Fig. 6 in an exploded view, consists of two heating module halves 19b, which are connected to each other via any number of connecting elements 19c (for example pins) and enclose a heating wire 19d. The heating wire 19d is accessible only at a contact side 45.

The heating module 19 is inserted into the heating module shaft 17 via a press fit 19a and extends almost over the entire shaft depth 39. The bottom 43, which closes the heating module shaft 17 at the front 21 so that the heating module shaft 17 is only accessible from the rear side 23, can also be seen.

In the exploded view of Fig. 6, it is further shown that the connecting elements 19c can be fitted into corresponding mating connecting elements 19f. Furthermore, it is shown that the heating wire 19d has a bend 47 on the contact side 45 of the heating module 19. On the one hand, this ensures the position of the heating wire 19d between the two heating module halves 19b and, on the other hand, a sufficiently large contact area is provided for contacting the printed circuit board 20. This contacting with the printed circuit board 20 is shown schematically in Fig. 5.

In Fig. 4, two of the four heating modules 19 are shown in sectional view. These are received in the thickenings 35 of the socket wall 31 in a press fit 19a. The heating module shaft 17 is bounded in each case by the bottom 43, so that the heating module shafts 17 are accessible only from the rear side 23. At this rear side, the heating wires 19d of the heating module 19 shown are also bent over, i.e. provided with a bend 47, in order to make electrical contact with the printed circuit board 20 (not shown, see Fig. 5).

### Reference Signs

- 1: charging socket
- 3: combined charging socket
- 5: AC charging socket
- 7: DC charging socket
- 9: electric or hybrid vehicle
- 11: charging plug
- 13: public charging station
- 15: private wallbox
- 17: heating module shaft
- 19: heating module
- 19a: press fit
- 19b: heating module half
- 19c: connection element
- 19d: heating wire
- 20: printed circuit board
- 21: front side
- 23: rear side
- 25: flattened shape
- 27: contact body
- 29: contact receptacle
- 31: socket wall
- 33: annular gap
- 35: thickening
- 37: lower area
- 39: shaft depth
- 41: depth between the rear side and the front side
- 43: bottom
- 45: contact side
- 47: bend of the heating wire

- A-A: plane
- B-B: plane
- C-C: plane

## Claims

1. Charging socket (1) for an electric or hybrid vehicle (9) for connection to a charging plug (11), wherein the charging socket (1) has at least one heating module shaft (17) which is adapted to receive a heating module (19), wherein the charging socket (1) has a socket wall (31) which, while forming an annular gap (33), encloses a contact body (27) receiving contact elements, **characterized in that** the at least one heating module shaft (17) extends into the socket wall (31).

2. Charging socket (1) according to claim 1, wherein the charging socket (1) has a front side (21) for plugging in the charging plug (11) and a rear side (23) facing away from the front side (21), wherein the at least one heating module shaft (17) extends from the rear side (23) to the front side (21) of the charging socket (1).

3. Charging socket (1) according to claim 2, wherein the at least one heating module shaft (17) opens towards the rear side (23).

4. Charging socket (1) according to one of claims 1 to 3, wherein the charging socket (1) has contact receptacles (29) which are adapted to receive electrical contacts for contacting mating contacts of a charging plug (11), and wherein the at least one heating module shaft (17) extends between at least two contact receptacles (29).

5. Charging socket (1) according to any one of claims 1 to 4, wherein the socket wall (31) has at least one thickening (35) in which a heating module shaft (17) is arranged, or the socket wall (31) has several thickenings (35), in each of which one of a plurality of heating module shafts (17) is arranged

6. Charging socket (1) according to one of claims 1 to 4, wherein the charging socket (1) is adapted with an AC charging socket (5) and a DC charging socket (7), and wherein the at least one heating module shaft (17) is arranged at the AC charging socket (5).

7. Charging socket (1) according to one of claims 2 to 6, wherein the at least one heating module shaft (17) extends over at least half of the depth (41) between the rear side and the front side of the charging socket (1).

8. Charging socket (1) according to one of claims 1 to 7, wherein a plurality of heating module shafts (17) is provided in the contact body (27) and/or in the socket wall (31), wherein the heating module shafts (17) open towards the rear side (23).

9. Charging socket (1) according to one of claims 1 to 7, wherein the at least one heating module shaft (17) has, towards the front side (21), a bottom (43) closing the at least one heating module shaft (17).

10. Charging socket (1) according to one of claims 1 to 9, comprising at least one heating module (19) received in the at least one heating module shaft (17).

11. Charging socket (1) according to claim 10, wherein the heating module (19) is received in the respective heating module shaft (17) without play or in a press fit (19a).

12. Charging socket (1) according to claim 10 or 11, wherein the heating module (19) is adapted to complement the heating module shaft (17).

13. Kit for providing a heatable charging socket (1) of an electric or hybrid vehicle (9), comprising a charging socket (1) as defined in any one of claims 1 to 12, having a plurality of N heating module shafts (17) arbitrarily equipped with 1 to N heating modules (19).

14. Electric or hybrid vehicle (9) with a charging socket (1) according to one of claims 1 to 12.

## Patentansprüche

1. Ladesteckdose (1) für ein Elektro- oder Hybridfahrzeug (9) zur Verbindung mit einem Ladestecker (11), wobei die Ladesteckdose (1) wenigstens einen Heizmodul-Schacht (17) aufweist, der zum Aufnehmen eines Heizmoduls (19) eingerichtet ist, und wobei die Ladesteckdose (1) eine Steckdosenwand (31) aufweist, die einen ringförmigen Spalt (33) bildet und damit einen Kontaktkörper (27) zum Aufnehmen von Kontaktelementen umschließt, **dadurch gekennzeichnet, dass** der wenigstens eine Heizmodul-Schacht (17) sich in die Steckdosenwand (31) hinein erstreckt.

2. Ladesteckdose (1) nach Anspruch 1, wobei die Ladesteckdose (1) eine Vorderseite (21) zum Einstecken des Ladesteckers (11) sowie eine Rückseite (23) aufweist, die von der Vorderseite (21) weg gewandt ist, wobei der wenigstens eine Heizmodul-Schacht (17) sich von der Rückseite (23) zu der Vorderseite (21) der Ladesteckdose (1) erstreckt.

3. Ladesteckdose (1) nach Anspruch 2, wobei sich der wenigstens eine Heizmodul-Schacht (17) in Richtung der Rückseite (23) öffnet.

4. Ladesteckdose (1) nach einem der Ansprüche 1 bis 3, wobei die Ladesteckdose (1) Kontaktbuchsen (29) aufweist, die zum Aufnehmen elektrischer Kontakte zum Herstellen von Kontakt mit Gegenkontakten eines Ladesteckers (11) eingerichtet sind, und wobei sich der wenigstens eine Heizmodul-Schacht (17) zwischen wenigstens zwei Kontaktbuchsen (29) erstreckt.

5. Ladesteckdose (1) nach einem der Ansprüche 1 bis 4, wobei die Steckdosenwand (31) wenigstens eine Verdickung (35) aufweist, in der der Heizmodul-Schacht (17) angeordnet ist, oder die Steckdosenwand (31) mehrere Verdickungen (35) aufweist, in denen jeweils eine Vielzahl von Heizmodul-Schächten (17) angeordnet sind.

6. Ladesteckdose (1) nach einem der Ansprüche 1 bis 4, wobei die Ladesteckdose (1) mit einer Wechselstrom-Ladesteckdose (5) und einer Gleichstrom-Ladesteckdose (7) versehen ist, und wobei der wenigstens eine Heizmodul-Schacht (17) an der Wechselstrom-Ladesteckdose (5) angeordnet ist.

7. Ladesteckdose (1) nach einem der Ansprüche 2 bis 6, wobei sich der wenigstens eine Heizmodul-Schacht (17) über wenigstens die Hälfte der Tiefe (41) zwischen der Rückseite und der Vorderseite der Ladesteckdose (1) erstreckt.

8. Ladesteckdose (1) nach einem der Ansprüche 1 bis 7, wobei eine Vielzahl von Heizmodul-Schächten (17) in dem Kontaktkörper (27) und/oder in der Steckdosenwand (31) vorhanden sind, und wobei sich die Heizmodul-Schächte (17) in Richtung der Rückseite (23) öffnen.

9. Ladesteckdose (1) nach einem der Ansprüche 1 bis 7, wobei der wenigstens eine Heizmodul-Schacht (17) in Richtung der Vorderseite (21) einen Boden (43) aufweist, der den wenigstens einen Heizmodul-Schacht (17) verschließt.

10. Ladesteckdose (1) nach einem der Ansprüche 1 bis 9, die wenigstens ein Heizmodul (19) umfasst, das in dem wenigstens einen Heizmodul-Schacht (17) aufgenommen ist.

11. Ladesteckdose (1) nach Anspruch 10, wobei das Heizmodul (19) in dem jeweiligen Heizmodul-Schacht (17) ohne Spiel oder in einer Presspassung (19a) aufgenommen ist.

12. Ladesteckdose (1) nach Anspruch 10 oder 11, wobei das Heizmodul (19) so eingerichtet ist, dass es den Heizmodul-Schacht (17) ausfüllt.

13. Bausatz zum Herstellen einer beheizbaren Ladesteckdose (1) eines Elektro- oder Hybridfahrzeugs (9), der eine Ladesteckdose (1) nach einem der Ansprüche 1 bis 12 umfasst, und eine Vielzahl von N Heizmodul-Schächten (17) aufweist, die beliebig mit 1 bis N Heizmodulen (19) ausgestattet werden.

14. Elektro- oder Hybridfahrzeug (9) mit einer Ladesteckdose (1) nach einem der Ansprüche 1 bis 12.

## Revendications

1. Prise de charge (1) pour véhicule électrique ou hybride (9) destinée à être raccordée à une prise de charge (11), dans laquelle la prise de charge (1) comporte au moins un axe de module chauffant (17) apte à recevoir un module chauffant (19), dans laquelle la prise de charge (1) comporte une paroi de prise (31) qui, tout en formant un espace annulaire (33), entoure un corps de contact (27) recevant des éléments de contact, **caractérisée en ce que** l'au moins un axe de module chauffant (17) s'étend à l'intérieur de la paroi de prise (31).

2. Prise de charge (1) selon la revendication 1, dans laquelle la prise de charge (1) a une face avant (21) pour le branchement de la prise de charge (11) et une face arrière (23) orientée à l'opposé de la face avant (21), dans laquelle l'au moins un axe de module chauffant (17) s'étend de la face arrière (23) à la face avant (21) de la prise de charge (1).

3. Prise de charge (1) selon la revendication 2, dans laquelle l'au moins un axe de module chauffant (17) s'ouvre vers la face arrière (23).

4. Prise de charge (1) selon l'une des revendications 1 à 3, dans laquelle la prise de charge (1) présente des réceptacles de contact (29) adaptés pour recevoir des contacts électriques destinés à entrer en contact avec des contacts homologues d'une prise de charge (11), et dans laquelle l'au moins un axe de module chauffant (17) s'étend entre au moins deux réceptacles de contact (29).

5. Prise de charge (1) selon l'une quelconque des revendications 1 à 4, dans laquelle la paroi de prise (31) présente au moins un épaississement (35) dans lequel est agencé un axe de module chauffant (17) ou la paroi de prise (31) présente plusieurs épaississements (35), dans chacun desquels est agencé un axe de module chauffant (17) parmi une pluralité d'axes de modules chauffants.

6. Prise de charge (1) selon l'une des revendications 1 à 4, dans laquelle la prise de charge (1) est adaptée avec une prise de charge en courant alternatif (5) et une prise de charge en courant continu (7), et dans laquelle l'au moins un axe de module chauffant (17) est agencé au niveau de la prise de charge en courant alternatif (5).

7. Prise de charge (1) selon l'une des revendications 2 à 6, dans laquelle l'au moins un axe de module chauffant (17) s'étend sur au moins la moitié de la profondeur (41) entre la face arrière et la face avant de la prise de charge (1).

8. Prise de charge (1) selon l'une des revendications 1 à 7, dans laquelle une pluralité d'axes de modules chauffants (17) est prévue dans le corps de contact (27) et/ou dans la paroi de prise (31), les axes de modules chauffants (17) débouchant vers la face arrière (23).

9. Prise de charge (1) selon l'une des revendications 1 à 7, dans laquelle l'au moins un axe de module chauffant (17) a, vers la face avant (21), un fond (43) fermant l'au moins un axe de module chauffant (17).

10. Prise de charge (1) selon l'une des revendications 1 à 9, comprenant au moins un module chauffant (19) reçu dans l'au moins un axe de module chauffant (17).

11. Prise de charge (1) selon la revendication 10, dans laquelle le module chauffant (19) est reçu dans l'axe de module chauffant (17) respectif sans jeu ou en emmanchement (19a).

12. Prise de charge (1) selon la revendication 10 ou 11, dans laquelle le module chauffant (19) est adapté pour compléter l'axe de module chauffant (17).

13. Kit de fourniture d'une prise de charge (1) chauffante d'un véhicule électrique ou hybride (9), comprenant une prise de charge (1) telle que définie selon l'une quelconque des revendications 1 à 12, ayant une pluralité de N axes de modules chauffants (17) équipés arbitrairement de 1 à N modules chauffants (19).

14. Véhicule électrique ou hybride (9) comportant une prise de charge (1) selon l'une des revendications 1 à 12.
